# EUROPEAN PATENT APPLICATION

(11) **EP 3 093 271 A1**
(43) Date of publication of application: **16.11.2016**
(21) Application number: 15733305.5
(22) Date of filing: 23.01.2015
(51) Int. Cl.: C01B 33/12, C10B 53/02, C10B 57/10

(54) **APPARATUS AND METHOD FOR INCREASING BIOMASS PYROLYSIS AND GAS PRODUCTION SPEED AND OBTAINING NANO-SCALE SILICA MATERIAL**

(30) Priority: 06.01.2014 CN 201410004144
(71) Applicant: Zhongying Changjiang International New Energy Investment Co., Ltd, Wuhan Hubei 430223 (CN)
(72) Inventor: CHEN, Yilong, Wuhan Hubei 430223 (CN); ZHANG, Yanfeng, Wuhan Hubei 430223 (CN); HAN, Xu, Wuhan Hubei 430223 (CN); LI, Hong, Wuhan Hubei 430223 (CN); TAO, Leiming, Wuhan Hubei 430223 (CN)
(74) Representative: Behr, Wolfgang
(86) International application number: PCT/CN2015/071390
(87) International publication number: WO 2015/101360

(57) **Abstract**

The present invention provides an apparatus and a method for increasing a biomass pyrolysis and gas production speed and obtaining a nano-scale silica material. The apparatus comprises a spiral feeding apparatus, a pretreatment stirrer, a pyrolysis apparatus, a combustion apparatus, a steam generator and a calcination apparatus. A biomass raw material is sent to the pretreatment stirrer through the spiral feeding apparatus. The biomass raw material after stirring is mixed with superheated steam generated by the steam generator and enters the pyrolysis apparatus. Combustible gas separated out from the pyrolysis apparatus enters the combustion apparatus for combustion. Hot flue gas generated by combustion in the combustion apparatus heats the steam generator to generate the superheated steam. Ash discharged from an ash outlet in a lower part of the pyrolysis apparatus enters the calcination apparatus for calcination. The present invention uses the superheated steam to heat and dry the biomass raw material, and is faster than a dry speed of a method where the biomass raw material is dried by hot air in a same temperature, thus greatly increasing a pyrolysis gas separating-out speed of a system compared with a pyrolysis gas separating-out speed of a conventional system and a heat value of produced gas.

## Description

### TECHNICAL FIELD

The invention relates to a device and method for speeding up the biomass pyrolysis gas production rate and producing nanoscale silica materials.

### BACKGROUND OF THE INVENTION

Although many natural resources are rich in silica, high-purity amorphous silica is seldom found in natural resources. At present, there are reports on production of amorphous silica by inorganic materials but the production technology of amorphous silica features the high production cost, large energy consumption and serious environmental pollution.

In addition, there are also some methods for extracting silica from biomass: for example, the patent ZL02807291.X presents the technology of producing high-purity amorphous silica from rice husks but doesn't consider the utilization of organic substances and energy and can't use biomass effectively. Although the applying public patent 102653406 presents the technical method for preparing amorphous silica from rice husks to damage the macromolecular chain structure like lignocelluloses to promote pyrolytic reactions through pickling and drying pretreatment of raw materials, the patent 10265340 doesn't consider the influence of the water content of biomass materials in the whole process system on the pyrolysis gas production rate and efficiency and the extremely low pyrolysis temperature produces condensable macromolecule gas in pyrolysis gas easily, thus leading to tar coagulation on walls of pyrolysis gas transmission pipelines and combustion equipment.

### SUMMARY OF THE INVENTION

The technological issue of the invention to be solved is to provide a device and method for speeding up the biomass pyrolysis gas production rate and producing nanoscale silica materials.

In order to solve the technological issue, the technical proposal of the invention is that:

A device for speeding up the biomass pyrolysis gas production rate and producing nanoscale silica materials is characterized in that: the device comprises a screw feeder, a pretreatment mixer, a pyrolysis device, a combustion train, a steam generator and a calcination device; biomass materials are transported into the pretreatment mixer by the screw feeder; the mixed biomass materials and overheated steam generated by the steam generator mix and enter the pyrolysis device; the consumable gas produced by the pyrolysis device enters the combustion train to burn; the hot smoke produced by the combustion train heats the steam generator to produce overheated steam; and cinder discharged from the cinder hole at the bottom of the pyrolysis device enters the calcination device to be calcined.

The steam generator in the technical proposal is an electrical steam generator, a fuel oil steam generator or a fuel gas steam generator.

The steam generator in the technical proposal is a fuel oil steam generator.

The fuel oil steam generator in the technical proposal comprises a cavity and an S-shaped coiler, a saturation boiling water tank and a two-way fin overheating coiler which are arranged from bottom to top in the cavity.

A method for speeding up the biomass pyrolysis gas production rate and producing nanoscale silica materials is characterized in that: the method mixes biomass materials evenly and then heats and dries the mixed biomass materials by overheated steam; the temperature of the overheated steam ranges between 120°C and 150°C; the evenly mixed and dried biomass materials undergo pyrolysis under anaerobic conditions; the temperature of pyrolysis ranges between 600°C and 800°C; combustible gas produced by pyrolysis burns; the hot smoke produced by burning combustible gas is used to heat the steam generator to produce overheated steam; and cinder discharged from the cinder hole at the bottom of the pyrolysis device is calcined under aerobic conditions to produce amorphous nanoscale silica materials.

The method in the technical proposal is characterized in that: the biomass materials are transported into the pretreatment mixer by screw feeder; the biomass materials is heated and dried by mixing with the overheated steam produced by the steam generator; the evenly mixed and dried biomass materials separate combustible gas out by pyrolysis device; then combustible gas enters the combustion train to burn; the hot smoke produced by combustion train is used to heat the overheated steam produced by steam generator; cinder discharged from the cinder hole at the bottom of the pyrolysis device is calcined in the calcination device; the calcined cinder cools and then is recycled as amorphous nanoscale silica materials.

The calcination in the technical proposal is air calcination and the temperature of calcination ranges between 500°C and 800°C.

The combustible gas produced by pyrolysis in the technical proposal is CO, CO₂, H₂, CH2, C₂H₂, C₂H₄, C₂H₆, C₃H₈ or C₃H₁₀ or the mixture of any two of them.

The biomass materials in the technical proposal are rice husks.

The invention has the useful effects of that:
(1) The invention is a comprehensive utilization technique which uses overheated steam for pretreatment of biomass materials and speeds up the pyrolysis of biomass materials to separate combustible gas out and produce nanoscale silica materials. The invention is characterized in that: the biomass materials are quickly heated and dried by water steam produced by waste heat and then undergo anaerobic pyrolysis quickly at the temperature ranging between 600°C and 800°C; the pyrolysis destroys macromolecular chains such as cellulose, hemicelluloses and lignin to quickly separate pyrolysis gas of high heat value out; the pyrolysis gas of high heat value burns and then enters the waste heat steam generator and the produced water steam is recycled; the residual solid cinder of pyrolysis is further removed carbonic impurities by aerobic calcinations and finally processed and recycled to produce silica industrial materials with nanoscale less than 100 nanometers.
(2) The water steam is produced by waste heat of smoke produced by pyrolytic reaction. The invention recycles the waste heat of smoke and solves the problem of the low pyrolysis rate and efficiency caused by the higher water content of regular biomass materials (mainly referring to rice husks) which consumes heat of pyrolysis reactions. Meanwhile, the invention reduces the production of tar during the pyrolysis of biomass materials (mainly referring to rice husks).
(3) Since the overheated water steam with a temperature ranging between 120°C and 150°C is used to heat and dry biomass materials (mainly referring to rice husks) has a higher drying rate than the method of drying biomass materials by hot air at the same temperature. Therefore, the rate that the system separates pyrolysis gas out is 20% higher than the rate that a regular system separates pyrolysis gas out; and the heat value of pyrolysis gas produced by the system is 10% higher than the heat value of pyrolysis gas produced by regular pyrolysis method.
(4) The method of using overheated water steam to dry materials is widely used in chemical, pharmaceutical, food and agricultural and sideline product processing industries but there is no case of using overheated water steam to dry biomass materials in the technical field of biomass energy utilization of the invention. When the system starts, the current overheated steam water drying technique needs fuel gas or other energies for boilers, plasma blowpipes and other equipment to support the stable operation of the whole system. However, the invention uses the steam produced by the waste heat of the burnt gas of biomass pyrolysis in the system; the source of the energy used to produce steam is different; the energy utilization efficiency of the system is also improved and the purpose of the invention is different from that of the traditional waste heat recycling system in using the technique. Meanwhile, the invention can produce amorphous silica material products.

### BRIEF DESCRIPTION OF THE DRAWINGS

Figure 1 is a structural diagram of a device for speeding up the biomass pyrolysis gas production rate and producing nanoscale silica materials in the embodiments of the invention.
Figure 2 is a structural diagram of the steam generator in the Figure 1,
Figure 3 is a SEM diagram of the Embodiment 1 of the invention.
Figure 4 is a XRD diagram of the Embodiments 1 and 2 and biomass materials.
In figures: 1-Screw Feeder, 2-Pretreatment Mixer, 3- pyrolysis device, 4-steam generator, 5-calcination device, 6- combustion train, 7-S-shaped Coiler, 8-Saturation Boiling Water Tank, 9-Two-way Fin Overheating Coiler and 10-Cavity.

### DETAILED DESCRIPTION OF THE EMBODIMENTS

The invention is further described by combining the figures and embodiments as follows. Of course, it is to understand that the embodiments of the invention are not to be limited to the following embodiments.

### Embodiment 1

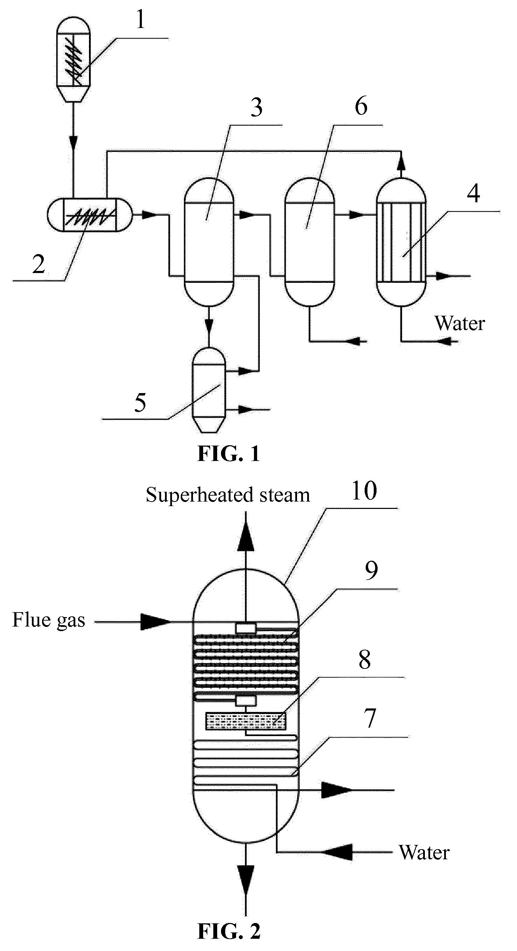

A device for speeding up the biomass pyrolysis gas production rate and producing nanoscale silica materials provided by the embodiment as shown in Figures 1 and 2 comprises a screw feeder 1, a pretreatment mixer 2, a pyrolysis device 3, a combustion train 6, a steam generator 4 and a calcination device 5. Biomass materials are transported into the pretreatment mixer 2 by the screw feeder 1; the mixed biomass materials and overheated steam generated by the steam generator 4 mix and enter the pyrolysis device 3; the consumable gas produced by the pyrolysis device 3 enters the combustion train 6 to burn; the hot smoke produced by the combustion train 6 heats the steam generator 4 to produce overheated steam; and cinder discharged from the cinder hole at the bottom of the pyrolysis device 3 enters the calcination device 5 to be calcined. The steam generator 4 can be an electrical steam generator, a fuel oil steam generator or a fuel gas steam generator. In the embodiment, the steam generator 4 is a fuel oil steam generator. The fuel oil steam generator comprises a cavity 10 and an S-shaped coiler 7, a saturation boiling water tank 8 and a two-way fin overheating coiler 9 which are arranged from bottom to top in the cavity 10.

The embodiment also provides a method for speeding up the biomass pyrolysis gas production rate and producing nanoscale silica materials. The method comprises the following steps:
(1) Rice husks are simply screened and washed to remove impurities like dirt in rice husks. The washed rice husks are transported to the pretreatment mixer 2 by screw feeder 1 and are dried and heated by mixing with the water steam from the later process.
(2) The mixed materials are transported into the pyrolysis device 3 to undergo pyrolysis at the temperature of 800°C under anaerobic conditions to quickly produce pyrolysis gas which is transported into the combustion train 6 for heat release.
(3) The waste heat smoke enters the steam generator 4 to produce overheated water steam with t temperature of 120°C. The overheated water steam is introduced back to the pretreatment mixer 2 to mix with the dried biomass materials.
   The specific steps of producing overheated water steam are as follows: the smoke produced by combustion reaction of pyrolysis gas enters the steam generator 4; the cold water passes through the S-shaped coiler 7, the saturation boiling water tank 8 and the two-way fin overheating coiler 9 from bottom to top to be heated to produce overheated water steam.
(4) The solid cinder produced by pyrolysis is transported to the calcination device 5 to be calcined at the temperature of 800°C under aerobic conditions. The calcined solid product is rice husk ash which is grinded to produce silica industrial materials with nanoscale less than 100 nanometers.

The pyrolysis gas produced by the pyrolysis steps is tested by gas analysis meter. According to the test results, the pyrolysis gas is CO, CO₂, H₂, CH2, C₂H₂, C₂H₄, C₂H₆, C₃H₈ or C₃H₁₀ or the mixture of any two of them.

A thermogravimetric analyzer is used at the pyrolysis device to test the weight-loss curve of the dried biomass materials online to produce the rate of pyrolysis gas production. Meanwhile, a gas analyzer is used to test the heat value of the produced pyrolysis gas online. The rate of pyrolysis gas production in the embodiment is 20% higher than the rate of pyrolysis gas production by regular system; and the heat value of pyrolysis gas produced in the embodiment is 10% higher than the heat value of pyrolysis gas produced by regular pyrolysis method.

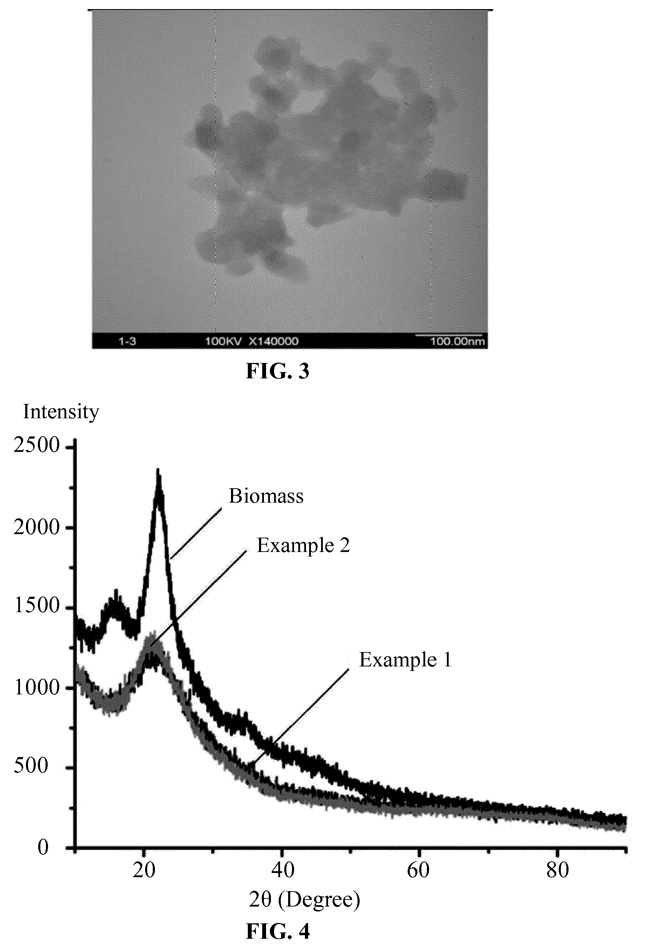

The finally produced amorphous nanoscale silica undergoes scanning electron microscope and XRD tests as shown in Figures 3 and 4 respectively. It is thus clear that: the silica materials are spherical particles with an average particle size less than 100 nm and the particles are loose; and, according to the XRD spectrum, it can be seen that there isn't obvious specific crystal diffraction peak so the product silica is amorphous in structure.

### Embodiment 2

The embodiment provides a method for speeding up the biomass pyrolysis gas production rate and producing nanoscale silica materials. The method comprises the following steps:
(1) Rice husks are simply screened and washed to remove impurities like dirt in rice husks. The washed rice husks are transported to the pretreatment mixer 2 by screw feeder 1 and are dried and heated by mixing with the water steam from the later process.
(2) The mixed materials are transported into the pyrolysis device 3 to undergo pyrolysis at the temperature of 600°C under anaerobic conditions to quickly produce pyrolysis gas which is transported into the combustion train 6 for heat release.
(3)
   The waste heat smoke enters the steam generator 4 to produce overheated water steam with the temperature of 150°C. The overheated water steam is introduced back to the pretreatment mixer 2 to mix with the dried biomass materials.
(4) The solid cinder produced by pyrolysis is transported to the calcination device 5 to be calcined at the temperature of 500°C under aerobic conditions. The calcined solid product is rice husk ash which is grinded to produce silica industrial materials with nanoscale less than 100 nanometers.

The pyrolysis gas produced by the pyrolysis steps is tested by gas analysis meter. According to the test results, the pyrolysis gas is CO, CO₂, H₂, CH2, C₂H₂, C₂H₄, C₂H₆, C₃H₈ or C₃H₁₀ or the mixture of any two of them.

The finally produced amorphous nanoscale silica undergoes scanning electron microscope and XRD tests (see Figure 4). It is thus clear that: the silica materials are spherical particles with an average particle size less than 100 nm and the particles are loose; and, according to the XRD spectrum, it can be seen that there isn't obvious specific crystal diffraction peak so the product silica is amorphous in structure.

It will be obvious to those skilled in the art that the technical proposals of the invention may take on various modifications and their equivalents without departing from the purpose and scope of the technical proposals of the invention. The modifications and equivalents should be covered within the scope of the claims of the invention.

## Claims

1. A device for speeding up the biomass pyrolysis gas production rate and producing nanoscale silica materials, comprising a screw feeder, a pretreatment mixer, a pyrolysis device, a combustion train, a steam generator and a calcination device; **characterized in that** biomass materials are transported into the pretreatment mixer by the screw feeder; the mixed biomass materials and overheated steam generated by the steam generator mix and enter the pyrolysis device; the consumable gas produced by the pyrolysis device enters the combustion train to burn; the hot smoke produced by the combustion train heats the steam generator to produce overheated steam; and cinder discharged from the cinder hole at the bottom of the pyrolysis device enters the calcination device to be calcined.

2. The device for speeding up the biomass pyrolysis gas production rate and producing nanoscale silica materials as claimed in Claim 1, **characterized in that** the steam generator is an electrical steam generator, a fuel oil steam generator or a fuel gas steam generator.

3. The device for speeding up the biomass pyrolysis gas production rate and producing nanoscale silica materials as claimed in Claim 2, **characterized in that** the steam generator is a fuel oil steam generator.

4. The device for speeding up the biomass pyrolysis gas production rate and producing nanoscale silica materials as claimed in Claim 3, **characterized in that** the fuel oil steam generator comprises a cavity and an S-shaped coiler, a saturation boiling water tank and a two-way fin overheating coiler which are arranged from bottom to top in the cavity.

5. A method for speeding up the biomass pyrolysis gas production rate and producing nanoscale silica materials, the method comprising mixing biomass materials evenly and then heating and drying the mixed biomass materials by overheated steam, wherein the temperature of the overheated steam ranges between 120°C and 150°C; pyrolyzing the evenly mixed and dried biomass materials under anaerobic conditions, wherein the temperature of pyrolysis ranges between 600°C and 800°C; burning combustible gas produced by pyrolysis; heating the steam generator to produce overheated steam using the hot smoke produced by burning combustible gas; and calcining cinder discharged from the cinder hole at the bottom of the pyrolysis device under aerobic conditions to produce amorphous nanoscale silica materials.

6. The method for speeding up the biomass pyrolysis gas production rate and producing nanoscale silica materials as claimed in Claim 5, **characterized in that** the biomass materials are transported into the pretreatment mixer by screw feeder; the biomass materials is heated and dried by mixing with the overheated steam produced by the steam generator; the evenly mixed and dried biomass materials separate combustible gas out by pyrolysis device; then combustible gas enters the combustion train to burn; the hot smoke produced by combustion train is used to heat the overheated steam produced by steam generator; cinder discharged from the cinder hole at the bottom of the pyrolysis device is calcined in the calcination device; the calcined cinder cools and then is recycled as amorphous nanoscale silica materials.

7. The method for speeding up the biomass pyrolysis gas production rate and producing nanoscale silica materials as claimed in Claim 5 or 6, **characterized in that** the calcination is air calcination and the temperature of calcination ranges between 500°C and 800°C.

8. The method for speeding up the biomass pyrolysis gas production rate and producing nanoscale silica materials as claimed in Claim 5 or 6, **characterized in that** the combustible gas is CO, CO₂, H₂, CH₄, C₂H₂, C₂H₄, C₂H₆, C₃H₈ or C₃H₁₀ or the mixture of any two of them.

9. The method for speeding up the biomass pyrolysis gas production rate and producing nanoscale silica materials as claimed in Claim 5 or 6, **characterized in that** the biomass materials are rice husks.
